# FASCICULE DE BREVET EUROPEEN

(11) **EP 3 484 724 B1**
(45) Date de publication et mention de la délivrance du brevet: **23.02.2022**
(21) Numéro de dépôt: 17748532.3
(22) Date de dépôt: 11.07.2017
(51) Int. Cl.: B60C 15/00, B60C 15/06, B60C 9/02

(54) **PNEUMATIQUE**
LUFTREIFEN
PNEUMATIC TIRE

(30) Priorité: 12.07.2016 FR 1656657
(43) Date de publication de la demande: 22.05.2019
(73) Titulaire: Compagnie Générale des Etablissements Michelin, 63000 Clermont-Ferrand (FR)
(72) Inventeur: FRANCIA, Marc, 63040 Clermont-Ferrand Cedex 9 (FR)
(74) Mandataire: Le Cam, Stéphane Georges Elie
(86) Numéro de dépôt international: PCT/FR2017/051891
(87) Numéro de publication internationale: WO 2018/011508

(56) Documents cités:
- EP-A1- 1 162 087
- EP-A2- 1 808 313
- WO-A1-2009/092648
- FR-A1- 3 029 840

## Description

La présente invention concerne un pneumatique à armature de carcasse radiale, destiné à équiper des véhicules de type petits poids-lourds (« light truck » en anglais) dont la pression d'utilisation est supérieure ou égale à 6 bars.

D'une manière générale dans les pneumatiques de type petit poids-lourds, l'armature de carcasse est ancrée de part et d'autre dans la zone du bourrelet et est surmontée radialement par une armature de sommet.

Pour ce type de pneumatique, l'armature de carcasse est usuellement constituée d'une couche d'éléments de renforcement métalliques.

L'armature de sommet comprend au moins deux couches, superposées et formées de fils ou câbles parallèles dans chaque couche et croisés d'une couche à la suivante en faisant avec la direction circonférentielle des angles compris entre 10° et 45°. Lesdites couches de travail peuvent encore être recouvertes d'au moins une couche dite de protection et formée d'éléments de renforcement avantageusement métalliques et extensibles, dits élastiques. L'armature de sommet peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail, formées de fils ou câbles parallèles présentant des angles au plus égaux à 45° en valeur absolue. La couche de triangulation forme avec au moins ladite couche de travail une armature triangulée, qui présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle du pneumatique des angles compris dans l'intervalle + 2,5°, - 2,5° autour de 0°.

La direction circonférentielle du pneumatique, ou direction longitudinale, est la direction tangente à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Les inventeurs se sont donnés pour mission de proposer des pneumatiques pour ce type d'application présentant une masse réduite et de coûts de fabrication inférieurs.

Il est ainsi connu de réaliser l'armature de carcasse avec deux couches constituées d'éléments de renforcement en textile.

Le document WO 97/27070 décrit un pneumatique dont l'armature de carcasse est constituée de deux couches, chacune étant retournée autour d'une tringle dans chacun des bourrelets. Afin de permettre un décalage radial des extrémités des retournements, les semi-finis correspondants à chacune des couches d'armature de carcasse présentent des dimensions différentes. Outre, la nécessité de multiplier les semi-finis, la fabrication d'un tel pneumatique implique un dispositif complexe permettant la pose de deux couches d'armature de carcasse différentes.

Le document EP 1 792 752 décrit un pneumatique dont l'armature de carcasse est constituée de deux couches, une seule étant retournée autour d'une tringle dans chacun des bourrelets. La deuxième couche vient couvrir chacun des retournements de la première couche dans les zones des bourrelets. Avec une telle conception, il n'y a pas de problèmes de proximité des extrémités de retournement mais la tenue de la couche d'armature de carcasse axialement la plus extérieure est plus délicate dans certains types d'usage, notamment du fait des charges portées.

Les documents FR 3 029 840 décrit un pneumatique pour véhicule comportant deux couches d'éléments de renforcement textiles formant la carcasse.

Le document WO 2009/092648 décrit un pneumatique d'avion dont la structure de carcasse est constituée de plusieurs couches d'éléments de renforcement textiles.

Le document EP 1 808 313 décrit un pneumatique pour véhicule comportant au moins deux couches d'éléments de renforcement textiles formant la carcasse.

Le document WO 97/27070 décrit un pneumatique dont l'armature de carcasse est constituée de deux couches associées à une troisième plus courte venant brider l'ensemble sur la tringle nécessitant des couches semi-finis de tailles différentes et un procédé de fabrication relativement complexe.

Les inventeurs ont par ailleurs mis en évidence que des armatures de carcasse ainsi constituée avec deux couches d'éléments de renforcement textiles peuvent présenter des défauts d'aspect sur la hauteur du flanc, dès lors que la pression d'utilisation est supérieure à 6 bars. En effet, chacune des couches d'armature de carcasse constituée d'éléments de renforcement textiles nécessite une soudure lors de la fabrication du pneumatique qui impose un recouvrement de ladite couche et constitue ainsi localement au tour de roue une rigidité sensiblement égale au double de la rigidité la couche. Lors du gonflage du pneumatique à plus de 6 bars, ces zones de rigidité accrue conduisent à limiter le gonflement localement et crée ainsi un défaut d'aspect sur la hauteur du flanc.

Un but de l'invention est de fournir des pneumatiques pour véhicules de type "petits Poids-Lourds", allégés par rapport à des pneumatiques réalisés avec une couche d'armature de carcasse métallique tout en assurant des performances des pneumatiques satisfaisantes notamment en termes d'endurance et qui ne présentent pas de défauts d'aspect inacceptables.

Ce but est atteint selon l'invention par un pneumatique selon la revendication 1.

Au sens de l'invention, la hauteur de la tringle est définie comme étant la distance radiale entre le point radialement le plus extérieur de la tringle et le point radialement le plus intérieur de la tringle.

Au sens de l'invention, une armature de carcasse radiale signifie que les éléments de renforcement des couches d'armature de carcasse sont dans un plan moyen formant un angle avec un plan radial inférieur ou égal à 10°, les deux plans étant sécants selon un axe perpendiculaire à l'axe de rotation.

Au sens de l'invention, la masse linéique d'éléments de renforcement par unité de largeur d'une couche d'éléments de renforcement est exprimée en Tex/dm, l'unité Tex étant définie comme suit : 1 Tex = 1g/km.

Chaque élément de renfort en polyester comprend un ou plusieurs brins multifilamentaire en polyester, assemblés ensemble. Chaque brin, ou filé, comprend plusieurs monofilaments élémentaires en polyester, typiquement plusieurs dizaines à plusieurs centaines, et présentant un diamètre généralement inférieur à 35 µm.

Par monofilament en polyester, on rappelle de manière bien connue qu'il s'agit d'un monofilament de macromolécules linéaires formées de groupes liés entre eux par des liaisons esters. Les polyesters sont fabriqués par polycondensation par estérification entre un diacide carboxylique, ou de l'un de ses dérivés, et un diol. Par exemple, le polyéthylène téréphtalate peut être fabriqué par polycondensation de l'acide téréphtalique et de l'éthylène glycol.

Le polyester est choisi parmi le polyéthylène téréphtalate, le polyéthylène naphthalate, le polybutylène téréphthalate, le polybutylène naphthalate, le polypropylène téréphthalate ou le polypropylène naphthalate. Selon un mode de réalisation préféré de l'invention, le polyester est du polyéthylène téréphtalate (PET).

Le monofilament en polyester utilisé peut être du type "Regular" (terme anglais signifiant normal) mais également du type "HMLS" (acronyme anglais signifiant "High Module Low Shrinkage"). De préférence, le polyester utilisé est du type "HMLS". Un polyester du type "HMLS" présente une contraction thermique standard mesurée après 2 minutes à 185°C sous une prétension de 0,5 cN/tex inférieure à 6,5 % et un allongement en extension sous charge de 7daN inférieur à 9%, mesuré sur le monofilament sous une prétension initiale de 0,5cN/tex et ayant subi une torsion de 100tr/m.

Selon un premier mode de réalisation de l'invention, les couches additionnelles d'éléments de renforcement en polyester présentes dans chacun des flancs forment une unique couche additionnelle qui s'étend d'un bourrelet à l'autre et donc continue radialement à l'intérieur de l'armature de sommet.

Selon le pneumatique de l'invention, permettant de contribuer à diminuer la masse du pneumatique, de part et d'autre du plan équatorial, ladite couche additionnelle d'éléments de renforcement en polyester présente une extrémité radialement extérieure qui est radialement intérieure à l'armature de sommet et axialement intérieure à l'extrémité axialement la plus extérieure de l'armature sommet la plus proche de ladite extrémité radialement extérieure de ladite couche additionnelle d'éléments de renforcement en polyester. En d'autres termes, dans chacun des flancs on trouve une couche additionnelle, lesdites couches additionnelles formant ensemble une couche d'éléments de renforcement interrompue radialement à l'intérieur d'au moins une partie de l'armature sommet.

Avantageusement encore selon l'invention, les éléments de renforcement en polyester des couches additionnelles sont orientés radialement, c'est-à-dire qu'ils sont dans un plan moyen formant un angle avec un plan radial inférieur ou égal à 10°, les deux plans étant sécants selon un axe perpendiculaire à l'axe de rotation.

Selon une variante de réalisation de l'invention, dans chaque bourrelet, les extrémités de ladite deuxième couche d'armature de carcasse sont radialement intérieures au centre géométrique de la tringle, au sens mathématique du barycentre, et avantageusement radialement intérieures au point radialement le plus intérieur de la tringle.

Selon une autre variante de réalisation de l'invention, dans chaque bourrelet, les extrémités de ladite deuxième couche d'armature de carcasse sont axialement intérieures au centre géométrique de la tringle.

Selon une variante de réalisation préférée de l'invention, dans chaque bourrelet, les extrémités de ladite deuxième couche d'armature de carcasse sont axialement extérieures au centre géométrique de la tringle et avantageusement radialement extérieures au point radialement le plus intérieur de la tringle et de préférence encore radialement intérieures au centre géométrique de la tringle.

Le pneumatique ainsi défini selon l'invention peut équiper des véhicules de type petit poids lourd et présente une masse réduite par rapport aux pneumatiques usuels comportant une armature de carcasse métallique avec des performances en termes d'endurance au moins aussi bonnes que celles des pneumatiques plus usuels, les défauts d'aspect évoqués précédemment étant fortement réduits et rendus tout à fait acceptables.

L'utilisation de deux couches d'armature de carcasse d'éléments de renforcement en polyester réalisées pour constituer la carcasse associées dans chaque flanc à une couche additionnelle conformément à l'invention, permet, tout en satisfaisant les critères de conception de tels pneumatiques que sont notamment les performances en matière d'endurance, du fait des matériaux et de la structure du pneumatique, de proposer un pneumatique plus léger que les pneumatiques usuels. En effet, les inventeurs ont notamment su mettre en évidence que l'invention conduit à une structure de pneumatique plus souple que celle des pneumatiques usuels et autorise ainsi une réalisation du bourrelet plus légère. Il est en effet usuel pour permettre une endurance satisfaisante de tels pneumatiques de rigidifier la zone basse du pneumatique ; cela se traduit habituellement par des épaisseurs de bourrelet relativement importantes qui alourdissent notablement le pneumatique.

Les inventeurs ont par ailleurs su mettre en évidence que la présence de la couche additionnelle dans chacun des flancs du pneumatique ainsi réalisé selon l'invention autorise une répartition des contraintes entre les différentes couches d'éléments de renforcement présentes dans les flancs lors du gonflage à des pressions de plus de 6 bars du pneumatique qui prévient ou tout au moins atténue l'apparition de défauts visuels sur les flancs.

Selon un mode de réalisation préféré de l'invention, la masse linéique d'éléments de renforcement par unité de largeur de la couche additionnelle d'éléments de renforcement en polyester est inférieure ou égale à la masse linéique d'éléments de renforcement par unité de largeur de la deuxième couche d'armature de carcasse

Avantageusement selon l'invention et notamment dans le cas d'usages sévères, la masse linéique d'éléments de renforcement par unité de largeur de la première couche d'armature de carcasse et la masse linéique d'éléments de renforcement par unité de largeur de la deuxième couche d'armature de carcasse sont supérieures à 46 000 Tex/dm.

Au sens de l'invention, des usages sévères correspondent soit à des pressions de gonflage plus élevées que les pressions de gonflages recommandées soit à des charges portées supérieures aux charges maximales recommandées.

Avantageusement encore dans le cas d'usages sévères, la masse linéique d'éléments de renforcement par unité de largeur de la première couche d'armature de carcasse est identique à la masse linéique d'éléments de renforcement par unité de largeur de la deuxième couche d'armature de carcasse.

Selon une variante dé réalisation avantageuse de l'invention, notamment pour permettre d'éviter d'utiliser une masse linéique d'éléments de renforcement par unité de largeur trop importante et ainsi limiter les risques de dégradation des performances d'endurance du bourrelet du pneumatique, dans chacun des flancs, la couche additionnelle d'éléments de renforcement en polyester est axialement extérieure à la première couche d'armature de carcasse.

Avantageusement encore selon l'invention, notamment pour permettre d'éviter d'utiliser une masse linéique d'éléments de renforcement par unité de largeur trop importante et ainsi limiter les risques de dégradation des performances d'endurance du bourrelet du pneumatique, dans chacun des flancs, la couche additionnelle d'éléments de renforcement en polyester est axialement intérieure à la deuxième couche d'armature de carcasse.

De préférence selon l'invention, dans chacun des flancs, la couche additionnelle d'éléments de renforcement en polyester est axialement intercalée entre les deux couches d'armature de carcasse.

Selon un mode de réalisation de l'invention, la couche additionnelle d'éléments de renforcement en polyester ne présente aucun retournement autour de la tringle.

De préférence, l'extrémité radialement intérieure de la couche additionnelle d'éléments de renforcement en polyester est axialement extérieure au point axialement le plus intérieur de la tringle dans chaque bourrelet ; de préférence également, l'extrémité radialement intérieure de la couche additionnelle d'éléments de renforcement en polyester est axialement extérieure au centre géométrique de la tringle; et de préférence encore, l'extrémité radialement intérieure de la couche additionnelle d'éléments de renforcement en polyester est axialement extérieure au point axialement le plus extérieur de la tringle dans chaque bourrelet.

Selon un mode de réalisation préféré de l'invention, dans chacun des flancs, la couche additionnelle d'éléments de renforcement en polyester est retournée autour de la tringle, la partie principale de la couche additionnelle d'éléments de renforcement en polyester passant axialement entre la tringle et la première couche d'armature de carcasse, le retournement passant axialement entre la tringle et le retournement de la première couche d'armature de carcasse.

Selon ce dernier mode de réalisation préféré de l'invention, dans chacun des flancs, la couche additionnelle contribue encore aux performances en termes d'endurance du pneumatique en éloignant la première couche d'armature de carcasse de la tringle et ainsi en limitant voire éliminant les risques d'agression de ladite première couche d'armature de carcasse par la tringle lors des roulages.

La présence de la couche additionnelle va également permettre de répartir entre la première couche d'armature de carcasse et ladite couche additionnelle les tensions qui peuvent être particulièrement élevées lors d'usages sévères s'accompagnant de températures élevées de la jante.

De préférence encore selon ce mode préféré de réalisation de l'invention, l'extrémité radialement intérieure de ladite couche additionnelle, c'est-à-dire l'extrémité de son retournement, est radialement extérieure au point radialement le plus extérieur de la tringle.

Selon ce dernier mode de réalisation préféré de l'invention, dans chacun des bourrelets, l'extrémité radialement intérieure de la couche additionnelle d'éléments de renforcement en polyester est de préférence encore radialement à l'intérieure de la direction axiale passant par l'intersection de la droite passant par le centre O de la courbure de la zone du pneumatique venant en appui sur le crochet de la jante, destinée à recevoir le pneumatique, et formant un angle de 45° avec la direction axiale, et le retournement de la première couche d'armature de carcasse.

De préférence selon l'invention, dans un plan méridien, une unique couche d'éléments de renforcement est présente axialement entre la surface extérieure du pneumatique et le retournement de la première couche d'armature de carcasse dans une zone délimitée radialement vers l'extérieur par la direction axiale passant l'extrémité du retournement de la première couche d'armature de carcasse et radialement vers l'intérieur par la direction axiale passant par l'intersection de la droite passant par le centre O de la courbure de la zone du pneumatique venant en appui sur le crochet de la jante, destinée à recevoir le pneumatique, et formant un angle de 45° avec la direction axiale, et le retournement de la première couche d'armature de carcasse.

Comme expliqué précédemment, pour former une couche d'armature de carcasse il est usuel de souder les extrémités de l'élément semi fini qui la constitue. Il est également usuel de former un recouvrement entre les deux extrémités pour renforcer ladite soudure. Au sens de l'invention, la zone de recouvrement forme une seule et unique couche bien que l'on trouve deux épaisseurs de ladite couche.

De préférence encore selon l'invention toujours en vue de performances d'endurance améliorées, dans tout plan méridien, dans chaque bourrelet, l'extrémité de la deuxième couche d'armature de carcasse est axialement extérieure au centre géométrique de la tringle et la direction passant par le centre géométrique de la tringle et l'extrémité de la deuxième couche d'armature de carcasse forme un angle θ avec la direction axiale inférieur à 50°.

Avantageusement selon l'invention, pour favoriser encore les performances en termes d'endurance, les couches d'armature de carcasse étant constituées d'éléments de renforcement entre deux couches de calandrage formées de mélange caoutchouteux présentant un module sécant d'élasticité sous tension à 10 % d'allongement, respectivement notés Mc₁ pour la première couche d'armature de carcasse et Mc₂ pour la deuxième couche d'armature de carcasse, les modules sécants d'élasticité sous tension à 10 % d'allongement Mc₁, Mc₂ satisfont la relation Mc₂/Mc₁≤ 4.6.

De préférence, pour des usages sévères, les modules sécants d'élasticité sous tension à 10 % d'allongement Mc₁, Mc₂ satisfont la relation Mc₂/Mc₁≥1 et de préférence encore la relation Mc₂/Mc₁≤ 2.6.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Les mesures de module des compositions de caoutchouc sont réalisées sur pneumatique neuf.

Avantageusement encore selon l'invention, pour favoriser encore les performances en termes d'endurance, la première couche d'armature de carcasse étant constituée d'éléments de renforcement entre deux couches de calandrage formées de mélange caoutchouteux présentant un module sécant d'élasticité sous tension à 10 % d'allongement Mc₁, et la couche additionnelle d'éléments de renforcement en polyester étant constituée d'éléments de renforcement en polyester entre deux couches de calandrage formées de mélange caoutchouteux présentant un module sécant d'élasticité sous tension à 10 % d'allongement Mc_{A}, les modules sécants d'élasticité sous tension à 10 % d'allongement Mc₁ et MC_{A} satisfont la relation Mc_{A}/Mc₁ ≤ 4.6.

De préférence, pour des usages sévères, les modules sécants d'élasticité sous tension à 10 % d'allongement Mc₁ et Mc_{A} sont égaux.

Selon un mode de réalisation avantageux de l'invention, la deuxième couche d'armature de carcasse étant constituée d'éléments de renforcement entre deux couches de calandrage formées de mélange caoutchouteux présentant un module sécant d'élasticité sous tension à 10 % d'allongement Mc₂ et ledit pneumatique comprenant dans chaque flanc un premier élément de remplissage, axialement intérieur à la surface extérieur d'un flanc et axialement extérieur à la deuxième couche d'armature de carcasse, constitué de mélange caoutchouteux présentant un module sécant d'élasticité sous tension à 10 % d'allongement Mj, les modules sécants d'élasticité sous tension à 10 % d'allongement Mc₂, Mj satisfont la relation Mc₂/Mj ≤ 4.

De telles relations entre les rigidités des couches de calandrage de la deuxième couche d'armature de carcasse et du premier élément de remplissage favorisent les performances d'endurance du pneumatique notamment en limitant les effets de cisaillements entre lesdits mélanges caoutchouteux.

De préférence, pour des usages sévères, les modules sécants d'élasticité sous tension à 10 % d'allongement Mc₂ et M_{J} satisfont la relation 1 ≤ Mc₂/Mj < 4.

Avantageusement encore selon l'invention pour favoriser les performances d'endurance du pneumatique, chaque bourrelet comprenant un premier élément de remplissage, axialement intérieur au flanc et axialement extérieur à la deuxième couche d'armature de carcasse, constitué de mélange caoutchouteux présentant un module sécant d'élasticité sous tension à 10 % d'allongement M_{J}, et comprenant un deuxième élément de remplissage, constitué de mélange caoutchouteux présentant un module sécant d'élasticité sous tension à 10 % d'allongement Mt, prolongeant radialement vers l'extérieur la tringle, les modules sécants d'élasticité sous tension à 10 % d'allongement Mt, Mj satisfont la relation Mt/Mj ≥ 1.

Selon un mode de réalisation préféré de l'invention, dans un plan méridien, dans chaque bourrelet, le pneumatique comporte une couche d'éléments de renforcement en polyamide aromatique au contact de ladite première couche d'armature de carcasse sur toute sa longueur, au moins une partie étant radialement intérieure à la tringle et dont les extrémités sont radialement extérieures au centre géométrique de la tringle et ladite première couche d'armature de carcasse étant intercalée entre la tringle et la couche d'éléments de renforcement en polyamide aromatique.

Une telle couche d'éléments de renforcement en polyamide aromatique permet lors de roulages prolongés de préserver la première couche d'armature de carcasse qui est soumise au niveau du bourrelet et notamment sous la tringle à des élévations de température conséquentes, ses éléments de renforcement subissant des phénomènes de striction. En effet, la couche d'éléments de renforcement en polyamide aromatique forme tout d'abord une protection thermique pour la première couche d'armature de carcasse et en outre du fait de l'absence de sensibilité des éléments de renforcement en polyamide aromatique à la température et de leur grande rigidité, elle protège les éléments de renforcement de la première couche d'armature de carcasse des phénomènes de striction.

La couche d'éléments de renforcement en polyamide aromatique favorise ainsi encore les performances d'endurance du pneumatique, notamment lors de roulages prolongés.

Selon une réalisation préférée de l'invention, la direction passant par le centre O de la courbure de la zone du pneumatique venant en appui sur le crochet de la jante destinée à recevoir le pneumatique et l'extrémité axialement extérieure de la couche d'éléments de renforcement en polyamide aromatique forme un angle α avec la direction axiale compris entre 0 et 45°.

De préférence également selon l'invention, la direction passant par le centre O de la courbure de la zone du pneumatique destiné venant en appui sur le crochet de la jante destinée à recevoir le pneumatique et l'extrémité axialement intérieure de la couche d'éléments de renforcement en polyamide aromatique forme un angle β avec la direction axiale compris entre 0 et 20°.

De tels positionnements des extrémités de la couche d'éléments de renforcement en polyamide aromatique favorisent encore les performances du pneumatique en termes d'endurance.

Une variante avantageuse de l'invention prévoit encore que la distance entre l'extrémité de la deuxième couche d'armature de carcasse et l'extrémité axialement la plus extérieure de la couche d'éléments de renforcement en polyamide aromatique est supérieure à 5 mm. Avantageusement encore, le recouvrement entre la deuxième couche d'armature de carcasse et la couche d'éléments de renforcement en polyamide aromatique est d'au moins 5 mm.

Une variante de réalisation de l'invention prévoit encore, dans tout plan méridien, dans chaque bourrelet, que le pneumatique comporte une armature de contention entourant la tringle et un volume de mélange caoutchouteux directement au contact de la tringle. Avantageusement, l'armature de contention est une couche d'éléments de renforcement constitués de fibres en polyamide aliphatique, orientés sensiblement radialement. Une telle armature de contention est par exemple décrite dans le brevet EP 2370275.

Une telle couche de contention entourant la tringle et un volume de mélange caoutchouteux directement au contact de la tringle favorise également les performances d'endurance du pneumatique notamment lorsque le pneumatique est soumis à des charges portées très importantes et/ou de fortes pressions de gonflage en limitant notamment les phénomènes d'indentation de la première couche d'armature de carcasse par la tringle.

Avantageusement selon l'invention, la tringle est de type TPFR (tringle paquet à fils ronds) de forme hexagonale.

Une variante avantageuse de l'invention prévoit encore notamment dans le cas de roulage en conditions extrêmes et notamment sous fortes charges que, la première couche d'armature de carcasse formant une partie principale entre les deux tringles et un retournement dans chacun des bourrelets, le retournement de la première couche d'armature de carcasse est distant de la couche additionnelle d'une distance d comprise entre 0.5 et 3.2 mm sur une longueur d'au moins 15 mm

Selon cette variante de réalisation de l'invention, le retournement de la première couche d'armature de carcasse est plaqué contre la couche additionnelle. La deuxième couche d'armature de carcasse est de ce fait également rapprochée de la partie principale de la première couche d'armature de carcasse et ainsi éloignée de la zone du pneumatique venant en appui sur le crochet de jante ; elle est en conséquence moins sollicitée en compression lors du roulage. Les performances en termes d'endurance sont ainsi encore améliorées. En outre, ce type de conception est également favorable pour lutter contre les risques de déroulement de la première couche d'armature de carcasse.

D'autres détails et caractéristiques avantageux de l'invention ressortiront ci-après de la description des exemples de réalisation de l'invention en référence aux figures 1 à 4 qui représentent :
- figure1, une représentation schématique d'une vue en coupe méridienne d'un pneumatique selon l'invention,
- figure 2, une représentation schématique d'une vue en coupe méridienne agrandie d'un bourrelet du pneumatique de la figure 1,
- figure 3, une représentation schématique d'une vue en coupe méridienne d'un bourrelet selon une variante de réalisation d'un pneumatique selon l'invention,
- figure 4, une représentation schématique d'une vue en coupe méridienne d'un bourrelet selon une autre variante de réalisation d'un pneumatique selon l'invention.

Les figures ne sont pas représentées à l'échelle pour en simplifier la compréhension.

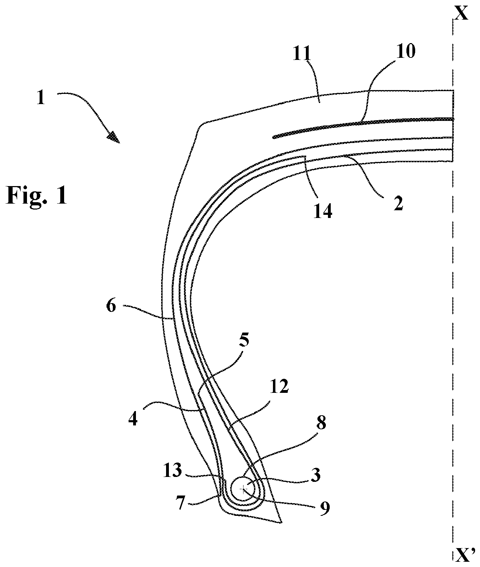

La figure 1 ne représente qu'une demi-vue d'un pneumatique qui se prolonge de manière symétrique par rapport à l'axe XX' qui représente le plan médian circonférentiel, ou plan équatorial, d'un pneumatique.

La figure 1 illustre une représentation schématique en coupe d'un pneumatique 1 de type petit poids lourd de dimension 7.50R16. Sur cette figure 1, est représentée l'armature de carcasse constituée d'une première couche 2 d'armature de carcasse enroulée autour d'une tringle 3 pour former un retournement 4 présentant une extrémité 5. Est également représentée une deuxième couche d'armature de carcasse 6 dont l'extrémité 7 est radialement intérieure au point radialement le plus extérieur 8 de la tringle 3 et axialement extérieure au centre géométrique 9 de la tringle 3.

Radialement à l'extérieur de l'armature de carcasse, on trouve une armature sommet 10 elle-même radialement surmontée de la bande de roulement 11.

Conformément à l'invention, le pneumatique comporte une couche additionnelle 12 d'éléments de renforcement présentant une extrémité radialement intérieure 13, radialement extérieure au point radialement le plus extérieur 8 de la tringle 3 et une extrémité radialement extérieure 14. L'extrémité 14 est radialement intérieure à l'armature de sommet 10 et axialement intérieure à l'extrémité axialement la plus extérieure de ladite armature de sommet 10. Dans l'exemple illustré sur la figure 1, la couche additionnelle est retournée autour de la tringle 3. Comme expliqué précédemment l'invention ne se limite pas à ce type de réalisation mais englobe également des couches additionnelles non retournées autour des tringles. Dans chacun des flancs, la couche additionnelle 12 est axialement intercalée entre les deux couches d'armature de carcasse 2 et 6.

Les éléments de renforcement de la couche additionnelle 12 sont des câbles PET (polyéthylène téréphtalate) de titre 167/2.

Les éléments de renforcement de la couche additionnelle 12 présentent une masse linéique égale à 334 Tex. Ils sont répartis dans la couche additionnelle 12 avec un pas égal à 0.9 mm.

La masse linéique d'éléments de renforcement par unité de largeur de la couche additionnelle 12 est égale à 36 740 Tex/dm.

Le module sécant d'élasticité sous tension à 10 % d'allongement Mcₐ de la couche additionnelle 12 est égal à 5.8 MPa.

Les couches d'armature de carcasse 2 et 6 sont constituées d'éléments de renforcement entre deux couches de calandrage formées de mélange caoutchouteux présentant des modules sécants d'élasticité sous tension à 10 % d'allongement, respectivement notés Mc₁ pour la première couche d'armature de carcasse et Mc₂ pour la deuxième couche d'armature de carcasse.

Les éléments de renforcement des deux couches d'armature de carcasse 2 et 6 sont des câbles PET (polyéthylène téréphtalate) de titre 334/2.

Les éléments de renforcement en PET des deux couches d'armature de carcasse 2 et 6 présentent des masses linéiques identiques et égales à 668 Tex. Ils sont répartis de manière identique dans les deux couches d'armature de carcasse 2 et 6 avec un pas égal à 1.25 mm.

La masse linéique d'éléments de renforcement par unité de largeur des deux couches d'armature de carcasse 2 et 6 est égale à 53 440 Tex/dm.

Le module sécant d'élasticité sous tension à 10 % d'allongement Mc₁ de la première couche d'armature de carcasse 2 est égal à 5.8 MPa.

Le module sécant d'élasticité sous tension à 10 % d'allongement Mc₂ de la deuxième couche d'armature de carcasse 6 est égal à 12.5 MPa.

Le ratio Mc₂/Mc₁ est égal à 2.1 et donc bien inférieur à 2.6.

Les modules sécants d'élasticité sous tension à 10 % d'allongement Mc₂ de la deuxième couche d'armature de carcasse 6 et Mcₐ de la couche additionnelle 12 sont égaux conformément à l'invention.

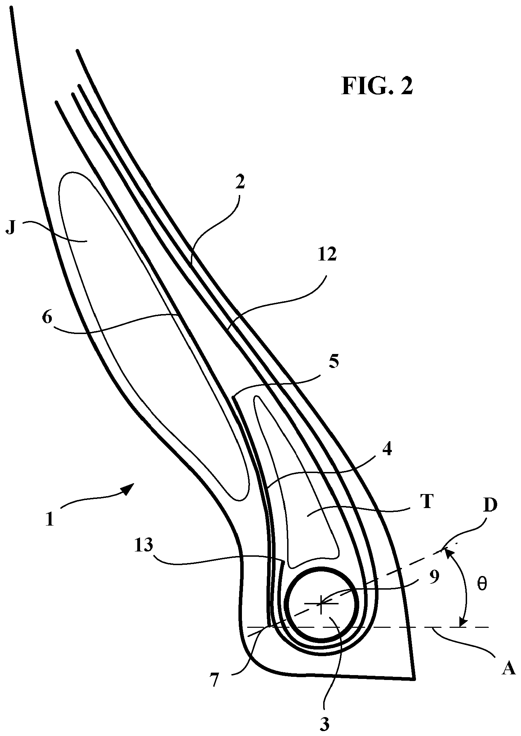

La figure 2 illustre de manière schématique une vue agrandie de la zone du bourrelet du pneumatique 1 de la figure 1.

Sur cette figure 2, on peut observer un premier élément de remplissage J, axialement intérieur au flanc et axialement extérieur au retournement de la première couche d'armature de carcasse 4, constitué de mélange caoutchouteux présentant un module sécant d'élasticité sous tension à 10 % d'allongement Mj égal à 7.8 MPa.

Le ratio Mc₂/Mj est égal à 1.6 et donc bien compris entre 1 et 4.

Le bourrelet 1 comporte encore un deuxième élément de remplissage T prolongeant radialement vers l'extérieur la tringle 3, constitué de mélange caoutchouteux présentant un module sécant d'élasticité sous tension à 10 % d'allongement Mt égal à 7.8 MPa. Le deuxième élément de remplissage T a, dans tout plan méridien, une section sensiblement triangulaire.

Le ratio Mt/Mj est égal à 1 et donc bien supérieur ou égal à 1.

La figure 2 illustre encore l'angle θ formé par la direction D, passant par le centre géométrique 9 de la tringle 3 et l'extrémité 7 de la deuxième couche 6 d'armature de carcasse, et la direction axiale A ; il est égal à 30° et donc inférieur à 50°.

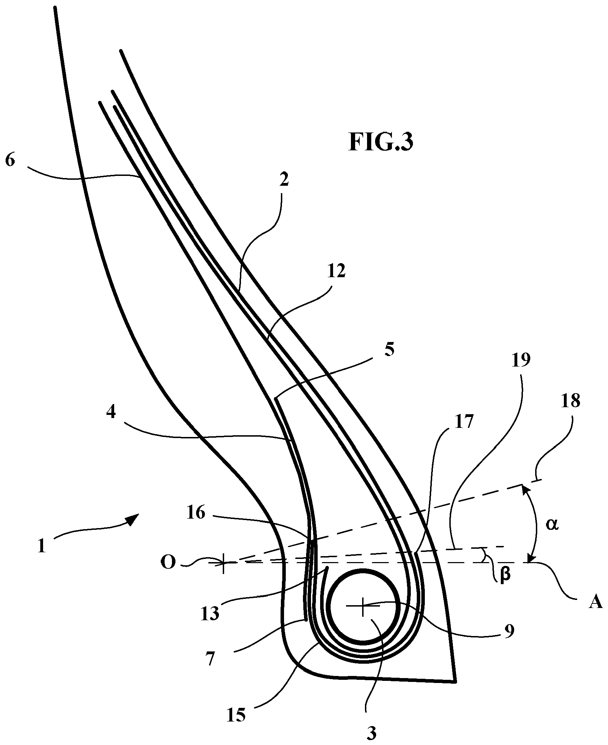

La figure 3 illustre une représentation schématique d'une vue en coupe de la zone d'un bourrelet d'une variante de réalisation d'un pneumatique selon l'invention. Cette variante de réalisation se distingue de la réalisation illustrée sur les figures 1 et 2 par la présence d'une couche 15 d'éléments de renforcement en polyamide aromatique. Cette couche 15 d'éléments de renforcement en polyamide aromatique est disposée sur toute sa longueur au contact de ladite première couche d'armature de carcasse 2 de sorte qu'au moins une partie de la couche 15 est radialement intérieure à la tringle 3 et de sorte que les extrémités 16, 17 de la couche 15 sont radialement extérieures au centre géométrique 9 de la tringle 3. Le positionnement de la couche15 est tel que la première couche d'armature de carcasse 2 est intercalée entre la tringle 3 et la couche 15 d'éléments de renforcement en polyamide aromatique.

L'angle α formé par la direction 18, passant par le centre O de la courbure du crochet de la jante destinée à recevoir le pneumatique et l'extrémité 16 axialement extérieure de la couche 15 d'éléments de renforcement en polyamide aromatique, et la direction axiale A est égal à 20°. L'angle α est donc compris entre 0 et 45°.

L'angle β formé par la direction 19, passant par le centre O de la courbure du crochet de la jante destinée à recevoir le pneumatique et l'extrémité 17 axialement intérieure de la couche 15 d'éléments de renforcement en polyamide aromatique, et la direction axiale A est égal à 10°. L'angle β est donc compris entre 0 et 20°.

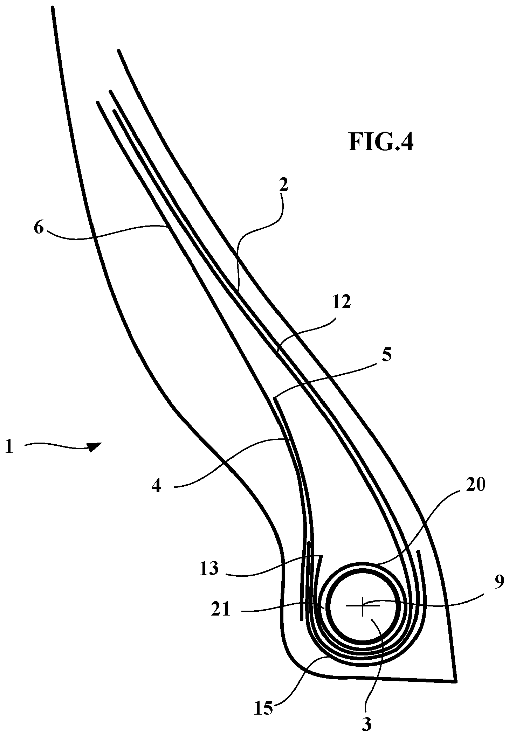

La figure 4 illustre une représentation schématique d'une vue coupe de la zone d'un bourrelet d'une autre variante de réalisation d'un pneumatique selon l'invention. Cette autre variante se distingue de la précédente variante illustrée sur la figure 3 par la présence dans chaque bourrelet d'une armature de contention 20 entourant la tringle 3 et un volume de mélange caoutchouteux 21 directement au contact de la tringle.

Des essais ont été réalisés avec des pneumatiques réalisés selon l'invention et d'autres avec des pneumatiques dits de référence.

Les pneumatiques selon l'invention qui sont testés sont conformes à la représentation des figures 1 et 2.

Les pneumatiques de référence sont des pneumatiques usuels de même dimension comportant une seule couche d'armature de carcasse retournée autour d'une tringle semblable à la première couche d'armature de carcasse 2 représentée sur la figure 1 et comportant des câbles métalliques de type 12.18.

Des essais d'endurance ont été réalisés sur une machine de test imposant à chacun des pneumatiques un roulage ligne droite à une vitesse variant de 50 à 110 km/h (l'indice de vitesse prescrit du pneumatique est égal à 120 km/h) sous une charge variant entre la charge nominale et 1.9 fois la charge nominale et à des pressions de gonflage variant entre 0.7 fois et 1.1 fois la pression nominale.

Un seuil de kilométrage réalisé est défini pour considérer les pneumatiques comme étant suffisamment endurant.

L'ensemble des pneumatiques testé à satisfait ce test en dépassant le seuil fixé.

Les pneumatiques selon l'invention conduisent donc à des performances notamment en termes d'endurance satisfaisantes.

La masse du pneumatique de référence est égale à 21.9 Kg.

La masse du pneumatique selon l'invention est égale à 19.3 Kg.

## Revendications

1. - Pneumatique (1) à armature de carcasse radiale, dont la pression de gonflage est supérieure ou égale à 6 bars, comprenant une armature de sommet (10), elle-même coiffée radialement d'une bande de roulement (11), ladite bande de roulement étant réunie à deux bourrelets par l'intermédiaire de deux flancs, chaque bourrelet comportant une tringle (3), ladite armature de carcasse étant constituée de deux couches d'éléments de renforcement textiles, une première couche d'armature de carcasse (2) étant retournée autour de la tringle (3) dans chacun des bourrelets, les extrémités (5) de ladite première couche d'armature de carcasse (2) étant radialement extérieure au point (8) radialement le plus extérieur de la tringle (3) dans chaque bourrelet et la deuxième couche d'armature de carcasse (6) s'étendant d'un bourrelet à l'autre, les extrémités (7) de ladite deuxième couche d'armature de carcasse étant radialement intérieures au point (8) radialement le plus extérieur de la tringle (3) dans chaque bourrelet, **caractérisé en ce que** les éléments de renforcement des deux couches d'armature de carcasse (2, 6) sont en polyester, **en ce qu'**une couche additionnelle (12) d'éléments de renforcement en polyester est présente dans chacun des flancs, **en ce que,** dans chacun des flancs, l'extrémité radialement intérieure (13) de ladite couche additionnelle d'éléments de renforcement en polyester est dans une zone radialement délimitée extérieurement par une droite d'orientation axiale distante radialement du point (8) radialement le plus extérieur de la tringle (3) d'une distance égale à deux fois la hauteur de la tringle, ladite hauteur de la tringle étant définie comme la distance radiale entre le point (8) radialement le plus extérieur de la tringle (3) et le point radialement le plus intérieur de la tringle (3), **en ce que,** de part et d'autre du plan équatorial, ladite couche additionnelle (12) d'éléments de renforcement en polyester présente une extrémité radialement extérieure (14) qui est radialement intérieure à l'armature de sommet (10) et axialement intérieure à l'extrémité axialement la plus extérieure de l'armature sommet la plus proche de ladite extrémité radialement extérieure (14) de ladite couche additionnelle (12) d'éléments de renforcement en polyester, **en ce que** le ratio de la masse linéique d'éléments de renforcement par unité de largeur de la deuxième couche d'armature de carcasse (6) sur la masse linéique d'éléments de renforcement par unité de largeur de la première couche d'armature de carcasse (2) est compris entre 75 et 100%, **en ce que** la masse linéique d'éléments de renforcement par unité de largeur de la couche additionnelle (12) d'éléments de renforcement en polyester est inférieure ou égale à la masse linéique d'éléments de renforcement par unité de largeur de la première couche d'armature de carcasse (2).

2. - Pneumatique (1) selon la revendication 1, **caractérisé en ce que** la masse linéique d'éléments de renforcement par unité de largeur de la couche additionnelle (12) d'éléments de renforcement en polyester est inférieure ou égale à la masse linéique d'éléments de renforcement par unité de largeur de la deuxième couche d'armature de carcasse (6).

3. - Pneumatique (1) selon l'une des revendications 1 ou 2, **caractérisé en ce que** la masse linéique d'éléments de renforcement par unité de largeur de la première couche d'armature de carcasse (2) et la masse linéique d'éléments de renforcement par unité de largeur de la deuxième couche d'armature de carcasse (6) sont supérieures à 46 000 Tex/dm.

4. - Pneumatique (1) selon l'une des revendications précédentes, **caractérisé en ce que,** dans chacun des flancs, la couche additionnelle (12) d'éléments de renforcement en polyester est retournée autour de la tringle (3).

5. - Pneumatique (1) selon l'une des revendications précédentes, **caractérisé en ce que,** dans un plan méridien, dans chacun des flancs et/ou bourrelets, une unique couche d'éléments de renforcement est présente axialement entre la surface extérieure du pneumatique et le retournement (4) de la première couche d'armature de carcasse (2) dans une zone délimitée radialement vers l'extérieur par la direction axiale passant par l'extrémité (5) du retournement (4) de la première couche d'armature de carcasse (2) et radialement vers l'intérieur par la direction axiale passant par l'intersection de la droite passant par le centre (O) de la courbure de la zone du pneumatique venant en appui sur le crochet de la jante, destinée à recevoir le pneumatique, et formant un angle de 45° avec la direction axiale (A) et le retournement (4) de la première couche d'armature de carcasse (2).

6. - Pneumatique (1) selon l'une des revendications précédentes, **caractérisé en ce que,** dans chaque bourrelet, la direction (D) passant par le centre géométrique (9) de la tringle (3) et l'extrémité (7) de la deuxième couche d'armature de carcasse (6) forme un angle (θ) avec la direction axiale (A) inférieur à 50°.

7. - Pneumatique (1) selon l'une des revendications précédentes, les couches d'armature de carcasse (2, 6) étant constituées d'éléments de renforcement entre deux couches de calandrage formées de mélange caoutchouteux présentant un module sécant d'élasticité sous tension à 10 % d'allongement, mesuré en traction selon la norme AFNOR-NFT-46002 de septembre 1988, respectivement notés Mc₁ pour la première couche d'armature de carcasse (2) et Mc₂ pour la deuxième couche d'armature de carcasse (6), **caractérisé en ce que** les modules sécants d'élasticité sous tension à 10 % d'allongement Mc₁ et Mc₂ satisfont la relation Mc₂/Mc₁≤ 4.6 et de préférence Mc₂/Mc₁≥1 et de préférence encore Mc₂/Mc₁≤2.6.

8. - Pneumatique (1) selon l'une des revendications précédentes, la première couche d'armature de carcasse (2) étant constituée d'éléments de renforcement entre deux couches de calandrage formées de mélange caoutchouteux présentant un module sécant d'élasticité sous tension à 10 % d'allongement Mc₁, mesuré en traction selon la norme AFNOR-NFT-46002 de septembre 1988, la couche additionnelle (12) d'éléments de renforcement en polyester étant constituée d'éléments de renforcement en polyester entre deux couches de calandrage formées de mélange caoutchouteux présentant un module sécant d'élasticité sous tension à 10 % d'allongement Mc_{A}, mesuré en traction selon la norme AFNOR-NFT-46002 de septembre 1988, **caractérisé en ce que** les modules sécants d'élasticité sous tension à 10 % d'allongement Mc₁ et Mc_{A} satisfont la relation Mc_{A}/Mc₁ ≤ 4.6 et de préférence sont égaux.

9. - Pneumatique (1) selon l'une des revendications précédentes, la deuxième couche d'armature de carcasse (6) étant constituée d'éléments de renforcement entre deux couches de calandrage formées de mélange caoutchouteux présentant un module sécant d'élasticité sous tension à 10 % d'allongement Mc₂, mesuré en traction selon la norme AFNOR-NFT-46002 de septembre 1988, dans chaque bourrelet, ledit pneumatique comprenant un premier élément de remplissage (J), axialement intérieur au flanc et axialement extérieur à la deuxième couche d'armature de carcasse (6), constitué de mélange caoutchouteux présentant un module sécant d'élasticité sous tension à 10 % d'allongement M_{J}, mesuré en traction selon la norme AFNOR-NFT-46002 de septembre 1988, **caractérisé en ce que** les modules sécants d'élasticité sous tension à 10 % d'allongement Mc₂ et M_{J} satisfont la relation Mc₂/M_{J}≤ 4 et de préférence, satisfont la relation 1 ≤ Mc₂/M_{J} < 4.

10. - Pneumatique (1) selon l'une des revendications précédentes, chaque bourrelet comprenant un premier élément de remplissage (J), axialement intérieur au flanc et axialement extérieur à la deuxième couche d'armature de carcasse (6), constitué de mélange caoutchouteux présentant un module sécant d'élasticité sous tension à 10 % d'allongement M_{J}, mesuré en traction selon la norme AFNOR-NFT-46002 de septembre 1988, et comprenant un deuxième élément de remplissage (T), constitué de mélange caoutchouteux présentant un module sécant d'élasticité sous tension à 10 % d'allongement Mt, mesuré en traction selon la norme AFNOR-NFT-46002 de septembre 1988, prolongeant radialement vers l'extérieur la tringle (3), **caractérisé en ce que** les modules sécants d'élasticité sous tension à 10 % d'allongement Mt et M_{J} satisfont la relation Mt/M_{J} ≥ 1.

11. - Pneumatique (1) selon l'une des revendications précédentes, **caractérisé en ce que,** dans un plan méridien, dans chaque bourrelet, le pneumatique comporte une couche d'éléments de renforcement en polyamide aromatique (15) au contact de ladite première couche d'armature de carcasse (2) sur toute sa longueur, au moins une partie étant radialement intérieure à la tringle (3) et dont les extrémités (16, 17) sont radialement extérieures au centre géométrique (9) de la tringle (3) et **en ce que** ladite première couche d'armature de carcasse (2) est intercalée entre la tringle (3) et la couche d'éléments de renforcement en polyamide aromatique (15).

12. - Pneumatique (1) selon la revendication 11, **caractérisé en ce que,** la direction (18) passant par le centre (O) de la courbure de la zone du pneumatique venant en appui sur le crochet de la jante, destinée à recevoir le pneumatique, et l'extrémité axialement extérieure (16) de la couche d'éléments de renforcement en polyamide aromatique (15) forme un angle (α) avec la direction axiale (A) compris entre 0 et 45°.

13. - Pneumatique (1) selon l'une des revendications 11 ou 12, **caractérisé en ce que** la direction (19) passant par le centre (O) de la courbure de la zone du pneumatique venant en appui sur le crochet de la jante, destinée à recevoir le pneumatique, et l'extrémité axialement intérieure (17) de la couche d'éléments de renforcement en polyamide aromatique (15) forme un angle (β) avec la direction axiale (A) compris entre 0 et 20°.

14. - Pneumatique (1) selon l'une des revendications précédentes, **caractérisé en ce que,** dans tout plan méridien, dans chaque bourrelet, le pneumatique comporte une armature de contention (20) entourant la tringle (3) et un volume de mélange caoutchouteux (21) directement au contact de la tringle.

15. - Utilisation d'un pneumatique (1) tel que décrit selon l'une des revendications 1 à 14 pour un véhicule de type petit poids lourd.

## Patentansprüche

1. Luftreifen (1) mit radialer Karkassenbewehrung, dessen Luftdruck höher als oder gleich 6 Bar ist, der eine Scheitelbewehrung (10) enthält, die selbst radial von einem Laufstreifen (11) überlagert wird, wobei der Laufstreifen mittels zweier Flanken mit zwei Wülsten vereint wird, wobei jeder Wulst einen Wulstkern (3) aufweist, wobei die Karkassenbewehrung aus zwei Schichten von textilen Verstärkungselementen besteht, wobei eine erste Karkassenbewehrungsschicht (2) in jedem der Wülste um den Wulstkern (3) herum umgeschlagen ist, wobei die Enden (5) der ersten Karkassenbewehrungsschicht (2) zum radial äußersten Punkt (8) des Wulstkerns (3) in jedem Wulst radial außen liegen, und die zweite Karkassenbewehrungsschicht (6) sich von einem Wulst zum anderen erstreckt, wobei die Enden (7) der zweiten Karkassenbewehrungsschicht zu m radial äußersten Punkt (8) des Wulstkerns (3) in jedem Wulst radial innen liegen, **dadurch gekennzeichnet, dass** die Verstärkungselemente der zwei Karkassenbewehrungsschichten (2, 6) aus Polyester sind, dass eine zusätzliche Schicht (12) von Verstärkungselementen aus Polyester in jeder der Flanken vorhanden ist, dass in jeder der Flanken das radial innere Ende (13) der zusätzlichen Schicht von Verstärkungselementen aus Polyester in einem Bereich liegt, der radial außen von einer Geraden axialer Ausrichtung radial beabstandet zum radial äußersten Punkt (8) des Wulstkerns (3) um einen Abstand gleich dem Doppelten der Höhe des Wulstkerns begrenzt wird, wobei die Höhe des Wulstkerns als der radiale Abstand zwischen dem radial äußersten Punkt (8) des Wulstkerns (3) und dem radial innersten Punkt des Wulstkerns (3) definiert wird, dass zu beiden Seiten der Äquatorialebene die zusätzliche Schicht (12) von Verstärkungselementen aus Polyester ein radial äußeres Ende (14) aufweist, das radial innen bezüglich der Scheitelbewehrung (10) und axial innen bezüglich des axial äußersten Endes der Scheitelbewehrung liegt, das dem radial äußeren Ende (14) der zusätzlichen Schicht (12) von Verstärkungselemente aus Polyester am nächsten liegt, dass das Verhältnis der längenbezogene Masse von Verstärkungselementen pro Breiteneinheit der zweiten Karkassenbewehrungsschicht (6) zur längenbezogenen Masse von Verstärkungselementen pro Breiteneinheit der ersten Karkassenbewehrungsschicht (2) zwischen 75 und 100% liegt, dass die längenbezogene Masse von Verstärkungselementen pro Breiteneinheit der zusätzlichen Schicht (12) von Verstärkungselementen aus Polyester geringer als die oder gleich der längenbezogenen Masse von Verstärkungselementen pro Breiteneinheit der ersten Karkassenbewehrungsschicht (2) ist.

2. Luftreifen (1) nach Anspruch 1, **dadurch gekennzeichnet, dass** die längenbezogene Masse von Verstärkungselementen pro Breiteneinheit der zusätzlichen Schicht (12) von Verstärkungselementen aus Polyester geringer als die oder gleich der längenbezogenen Masse von Verstärkungselementen pro Breiteneinheit der zweiten Karkassenbewehrungsschicht (6) ist.

3. Luftreifen (1) nach einem der Ansprüche 1 oder 2, **dadurch gekennzeichnet, dass** die längenbezogene Masse von Verstärkungselementen pro Breiteneinheit der ersten Karkassenbewehrungsschicht (2) und die längenbezogene Masse von Verstärkungselementen pro Breiteneinheit der zweiten Karkassenbewehrungsschicht (6) über 46 000 Tex/dm liegen.

4. Luftreifen (1) nach einem der vorhergehenden Ansprüche, **dadurch gekennzeichnet, dass** die zusätzliche Schicht (12) von Verstärkungselementen aus Polyester in jeder der Flanken um den Wulstkern (3) umgeschlagen ist.

5. Luftreifen (1) nach einem der vorhergehenden Ansprüche, **dadurch gekennzeichnet, dass** in einer Meridianebene in jeder der Flanken und/oder jedem der Wülste eine einzige Schicht von Verstärkungselementen axial zwischen der Außenfläche des Luftreifens und dem Umschlag (4) der ersten Karkassenbewehrungsschicht (2) in einem Bereich vorhanden ist, der radial nach außen von der durch das Ende (5) des Umschlags (4) der ersten Karkassenbewehrungsschicht (2) verlaufenden axialen Richtung und radial nach innen von der axialen Richtung begrenzt wird, die durch die Schnittlinie der Geraden, die durch die Mitte (O) der Krümmung des Bereichs des Luftreifens verläuft, der auf dem Haken der Felge in Auflage kommt, die dazu bestimmt ist, den Luftreifen aufzunehmen, und einen Winkel von 45° mit der axialen Richtung (A) bildet, und den Umschlag (4) der ersten Karkassenbewehrungsschicht (2) verläuft.

6. Luftreifen (1) nach einem der vorhergehenden Ansprüche, **dadurch gekennzeichnet, dass** in jedem Wulst die durch die geometrische Mitte (9) des Wulstkerns (3) und das Ende (7) der zweiten Karkassenbewehrungsschicht (6) verlaufende Richtung (D) einen Winkel (θ) mit der axialen Richtung (A) von weniger als 50° bildet.

7. Luftreifen (1) nach einem der vorhergehenden Ansprüche, wobei die Karkassenbewehrungsschichten (2, 6) aus Verstärkungselementen zwischen zwei Kalandrierschichten bestehen, die aus einer Kautschukmischung gebildet werden, die einen Sekantenmodul einer Elastizität unter Spannung bei 10% Dehnung aufweist, gemessen unter Zug gemäß der Norm AFNOR-NFT-46002 von September 1988, mit Mc₁ für die erste Karkassenbewehrungsschicht (2) bzw. Mc₂ für die zweite Karkassenbewehrungsschicht (6) bezeichnet, **dadurch gekennzeichnet, dass** die Sekantenmodule einer Elastizität unter Spannung bei 10% Dehnung Mc₁ und Mc₂ die Beziehung Mc₂/Mc₁ ≤ 4.6 und vorzugsweise Mc₂/Mc₁ ≥ 1 und noch bevorzugt Mc₂/Mc₁ ≤ 2.6 erfüllen.

8. Luftreifen (1) nach einem der vorhergehenden Ansprüche, wobei die erste Karkassenbewehrungsschicht (2) aus Verstärkungselementen zwischen zwei Kalandrierschichten besteht, die aus einer Kautschukmischung gebildet werden, die einen Sekantenmodul einer Elastizität unter Spannung bei 10% Dehnung Mc₁ aufweist, gemessen unter Zug gemäß der Norm AFNOR-NFT-46002 von September 1988, wobei die zusätzliche Schicht (12) von Verstärkungselementen aus Polyester aus Verstärkungselementen aus Polyester zwischen zwei Kalandrierschichten besteht, die aus einer Kautschukmischung gebildet werden, die einen Sekantenmodul einer Elastizität unter Spannung bei 10% Dehnung Mc_{A} aufweist, gemessen unter Zug gemäß der Norm AFNOR-NFT-46002 von September 1988, **dadurch gekennzeichnet, dass** die Sekantenmodule einer Elastizität unter Spannung bei 10% Dehnung Mc₁ und Mc_{A} die Beziehung Mc_{A}/Mc₁ ≤ 4.6 erfüllen und vorzugsweise gleich sind.

9. Luftreifen (1) nach einem der vorhergehenden Ansprüche, wobei die zweite Karkassenbewehrungsschicht (6) aus Verstärkungselementen zwischen zwei Kalandrierschichten besteht, die aus einer Kautschukmischung gebildet werden, die einen Sekantenmodul einer Elastizität unter Spannung bei 10% Dehnung Mc₂ aufweist, gemessen unter Zug gemäß der Norm AFNOR-NFT-46002 von September 1988, in jedem Wulst, wobei der Luftreifen ein erstes Füllelement (J) axial innen bezüglich der Flanke und axial außen bezüglich der zweiten Karkassenbewehrungsschicht (6) enthält, das aus einer Kautschukmischung besteht, die einen Sekantenmodul einer Elastizität unter Spannung bei 10% Dehnung M_{J} aufweist, gemessen unter Zug gemäß der Norm AFNOR-NFT-46002 von September 1988, **dadurch gekennzeichnet, dass** die Sekantenmodule einer Elastizität unter Spannung bei 10% Dehnung Mc₂ und M_{J} die Beziehung Mc₂/M_{J}≤ 4 erfüllen und vorzugsweise die Beziehung 1 ≤ Mc₂/M_{J} ≤ 4 erfüllen.

10. Luftreifen (1) nach einem der vorhergehenden Ansprüche, wobei jeder Wulst ein erstes Füllelement (J), axial innen bezüglich der Flanke und axial außen bezüglich der zweiten Karkassenbewehrungsschicht (6), bestehend aus einer Kautschukmischung, die einen Sekantenmodul einer Elastizität unter Spannung bei 10% Dehnung M_{J} aufweist, gemessen unter Zug gemäß der Norm AFNOR-NFT-46002 von September 1988, und ein zweites Füllelement (T) enthält, bestehend aus einer Kautschukmischung, die einen Sekantenmodul einer Elastizität unter Spannung bei 10% Dehnung Mt aufweist, gemessen unter Zug gemäß der Norm AFNOR-NFT-46002 von September 1988, das den Wulstkern (3) radial nach außen verlängert, **dadurch gekennzeichnet, dass** die Sekantenmodule einer Elastizität unter Spannung bei 10% Dehnung Mt und M_{J} die Beziehung Mt/M_{J} ≥ 1 erfüllen.

11. Luftreifen (1) nach einem der vorhergehenden Ansprüche, **dadurch gekennzeichnet, dass** der Luftreifen in einer Meridianebene in jedem Wulst eine Schicht von Verstärkungselementen aus aromatischem Polyamid (15) über ihre ganze Länge in Kontakt mit der ersten Karkassenbewehrungsschicht (2) aufweist, wobei mindestens ein Teil bezüglich des Wulstkerns (3) radial innen liegt, und deren Enden (16, 17) bezüglich der geometrischen Mitte (9) des Wulstkerns (3) radial außen liegen, und dass die erste Karkassenbewehrungsschicht (2) zwischen dem Wulstkern (3) und der Schicht von Verstärkungselementen aus aromatischem Polyamid (15) eingefügt ist.

12. Luftreifen (1) nach Anspruch 11, **dadurch gekennzeichnet, dass** die durch die Mitte (O) der Krümmung des Bereichs des Luftreifens, der auf dem Haken der Felge in Auflage kommt, die dazu bestimmt ist, den Luftreifen aufzunehmen, verlaufende Richtung (18) und das axial äußere Ende (16) der Schicht von Verstärkungselementen aus aromatischem Polyamid (15) mit der axialen Richtung (A) einen Winkel (α) zwischen 0 und 45° bilden.

13. Luftreifen (1) nach einem der Ansprüche 11 oder 12, **dadurch gekennzeichnet, dass** die durch die Mitte (O) der Krümmung des Bereichs des Luftreifens, der auf dem Haken der Felge in Auflage kommt, die dazu bestimmt ist, den Luftreifen aufzunehmen, verlaufende Richtung (19) und das axial innere Ende (17) der Schicht von Verstärkungselementen aus aromatischem Polyamid (15) mit der axialen Richtung (A) einen Winkel (β) zwischen 0 und 20° bilden.

14. Luftreifen (1) nach einem der vorhergehenden Ansprüche, **dadurch gekennzeichnet, dass** in jeder Meridianebene in jedem Wulst der Luftreifen eine den Wulstkern (3) umgebende Stützbewehrung (20) und ein Kautschukmischungsvolumen (21) aufweist, das direkt mit dem Wulstkern in Kontakt ist.

15. Verwendung eines Luftreifens (1) wie in einem der Ansprüche 1 bis 14 beschrieben für ein Fahrzeug der Art Kleinlastwagen.

## Claims

1. - Tyre (1) with radial carcass reinforcement, the inflation pressure of which is greater than or equal to 6 bar, comprising a crown reinforcement (10), itself capped radially by a tread (11), said tread being connected to two beads, each bead comprising a bead wire (3), by means of two sidewalls, said carcass reinforcement being made up of two layers of textile reinforcing elements, a first layer of carcass reinforcement (2) being turned up around the bead wire (3) in each of the beads, the ends (5) of said first layer of carcass reinforcement (2) being radially on the outside of the radially outermost point (8) of the bead wire (3) in each bead and the second layer of carcass reinforcement (6) extending from one bead to the other, the ends (7) of said second layer of carcass reinforcement being radially on the inside of the radially outermost point (8) of the bead wire (3) in each bead, **characterized in that** the reinforcing elements of the two carcass reinforcement layers (2, 6) are made of polyester, **in that** an additional layer (12) of polyester reinforcing elements is present in each of the sidewalls, **in that,** in each of the sidewalls, the radially inner end (13) of said additional layer of polyester reinforcing elements is in a region that is radially delimited externally by a straight line of axial orientation that is radially distant from the radially outermost point (8) of the bead wire (3) by a distance equal to two times the height of the bead wire, said height of the bead wire is defined as being the radial distance between the radially outermost point (8) of the bead wire (3) and the radially innermost point of the bead wire (3), **in that,** on either side of the equatorial plane, said additional layer (12) of polyester reinforcing elements has a radially outer end (14) which is radially on the inside of the crown reinforcement (10) and axially on the inside of the axially outermost end of the crown reinforcement closest to said radially outer end (14) of said additional layer (12) of polyester reinforcing elements, **in that** the ratio of the linear density of reinforcing elements per unit width of the second layer of carcass reinforcement (6) to the linear density of reinforcing elements per unit width of the first layer of carcass reinforcement (2) is between 75% and 100%, **in that** the linear density of reinforcing elements per unit width of the additional layer (12) of polyester reinforcing elements is less than or equal to the linear density of reinforcing elements per unit width of the first layer of carcass reinforcement (2).

2. - Tyre (1) according to Claim 1, **characterized in that** the linear density of reinforcing elements per unit width of the additional layer (12) of polyester reinforcing elements is less than or equal to the linear density of reinforcing elements per unit width of the second layer of carcass reinforcement (6).

3. - Tyre (1) according to one of Claims 1 or 2, **characterized in that** the linear density of reinforcing elements per unit width of the first layer of carcass reinforcement (2) and the linear density of reinforcing elements per unit width of the second layer of carcass reinforcement (6) are greater than 46 000 Tex/dm.

4. - Tyre (1) according to one of the preceding claims, **characterized in that,** in each of the sidewalls, the additional layer (12) of polyester reinforcing elements is turned up around the bead wire (3).

5. - Tyre (1) according to one of the preceding claims, **characterized in that,** in a meridian plane, in each of the sidewalls and/or beads, a single layer of reinforcing elements is present axially between the outer surface of the tyre and the turn-up (4) of the first layer of carcass reinforcement (2) in a region delimited radially outwards by the axial direction passing through the end (5) of the turn-up (4) of the first layer of carcass reinforcement (2) and radially inwards by the axial direction passing through the intersection of the straight line passing through the centre (O) of curvature of the region of the tyre that comes to bear on the flange of the rim, intended to receive the tyre, and making an angle of 45° with the axial direction (A) and the turn-up (4) of the first layer of carcass reinforcement (2).

6. - Tyre (1) according to one of the preceding claims, **characterized in that,** in each bead, the direction (D) passing through the geometric centre (9) of the bead wire (3) and the end (7) of the second layer of carcass reinforcement (6) makes an angle θ of less than 50° with the axial direction (A).

7. - Tyre (1) according to one of the preceding claims, the layers of carcass reinforcement (2, 6) being made up of reinforcing elements between two calendering layers formed of rubber compound having a tensile secant modulus of elasticity at 10% elongation, measured under tension in accordance with the standard AFNOR-NFT-46002 of September 1988, respectively denoted by Mc₁ for the first layer of carcass reinforcement (2) and Mc₂ for the second layer of carcass reinforcement (6), **characterized in that** the tensile secant moduli of elasticity at 10% elongation Mc₁ and Mc₂ satisfy the relationship Mc₂/Mc₁ ≤ 4.6 and preferably Mc₂/Mc₁ ≥ 1 and more preferably Mc₂/Mc₁ ≤ 2.6.

8. - Tyre (1) according to one of the preceding claims, the first layer of carcass reinforcement (2) being made up of reinforcing elements between two calendering layers formed of rubber compound having a tensile secant modulus of elasticity at 10% elongation Mc₁, measured under tension in accordance with the standard AFNOR-NFT-46002 of September 1988, the additional layer (12) of polyester reinforcing elements being made up of polyester reinforcing elements between two calendering layers formed of rubber compound having a tensile secant modulus of elasticity at 10% elongation Mc_{A}, measured under tension in accordance with the standard AFNOR-NFT-46002 of September 1988, **characterized in that** the tensile secant moduli of elasticity at 10% elongation Mc₁ and Mc_{A} satisfy the relationship Mc_{A}/Mc₁ ≤ 4.6 and preferably are equal.

9. - Tyre (1) according to one of the preceding claims, the second layer of carcass reinforcement (6) being made up of reinforcing elements between two calendering layers formed of rubber compound having a tensile secant modulus of elasticity at 10% elongation Mc₂, measured under tension in accordance with the standard AFNOR-NFT-46002 of September 1988, in each bead, said tyre comprising a first filling element (J), axially on the inside of the sidewall and axially on the outside of the second layer of carcass reinforcement (6), made up of rubber compound having a tensile secant modulus of elasticity at 10% elongation M_{J}, measured under tension in accordance with the standard AFNOR-NFT-46002 of September 1988, **characterized in that** the tensile secant moduli of elasticity at 10% elongation Mc₂ and M_{J} satisfy the relationship Mc₂/M_{J} ≤ 4 and preferably, satisfy the relationship 1 ≤ Mc₂/M_{J} < 4.

10. - Tyre (1) according to one of the preceding claims, each bead comprising a first filling element (J), axially on the inside of the sidewall and axially outside of the second layer of carcass reinforcement (6), made up of rubber compound having a tensile secant modulus of elasticity at 10% elongation M_{J}, measured under tension in accordance with the standard AFNOR-NFT-46002 of September 1988, and comprising a second filling element (T), made up of rubber compound having a tensile secant modulus of elasticity at 10% elongation Mt, measured under tension in accordance with the standard AFNOR-NFT-46002 of September 1988, extending the bead wire (3) radially outwards, **characterized in that** the tensile secant moduli of elasticity at 10% elongation Mt and M_{J} satisfy the relationship Mt/M_{J} ≥ 1.

11. - Tyre (1) according to one of the preceding claims, **characterized in that,** in a meridian plane, in each bead, the tyre comprises a layer of reinforcing elements made of aromatic polyamide (15) in contact with said first layer of carcass reinforcement (2) over the entire length thereof, at least one part being radially on the inside of the bead wire (3) and the ends (16, 17) of which are radially on the outside of the geometric centre (9) of the bead wire (3) and **in that** said first layer of carcass reinforcement (2) is inserted between the bead wire (3) and the layer of reinforcing elements made of aromatic polyamide (15).

12. - Tyre (1) according to Claim 11, **characterized in that,** the direction (19) passing through the centre (O) of curvature of the region of the tyre that comes to bear against the flange of the rim intended to receive the tyre, and the axially outer end (16) of the layer of reinforcing elements made of aromatic polyamide (15) makes an angle (α) of between 0 and 45° with the axial direction (A).

13. - Tyre (1) according to either of Claims 11 and 12, **characterized in that,** the direction (19) passing through the centre (O) of curvature of the region of the tyre that comes to bear against the flange of the rim intended to receive the tyre, and the axially inner end (17) of the layer of reinforcing elements made of aromatic polyamide (15) makes an angle β of between 0 and 20° with the axial direction (A).

14. - Tyre (1) according to one of the preceding claims, **characterized in that,** in any meridian plane, in each bead, the tyre comprises a retaining reinforcement (20) surrounding the bead wire (3) and a volume of rubber compound (21) directly in contact with the bead wire.

15. - Use of a tyre (1) as described according to one of Claims 1 to 14 for a vehicle of light truck type.
